# EUROPEAN PATENT SPECIFICATION

(11) **EP 3 671 784 B1**
(45) Date of publication and mention of the grant of the patent: **10.06.2026**
(21) Application number: 18214737.1
(22) Date of filing: 20.12.2018
(51) Int. Cl.: H01H 3/26, H02K 26/00, H01F 7/14

(54) **HYBRID FLUX MOTOR FOR A MEDIUM VOLTAGE CIRCUIT BREAKER**
HYBRIDER FLUSSMOTOR FÜR EINEN MITTELSPANNUNGSSCHUTZSCHALTER
MOTEUR À FLUX HYBRIDE POUR UN DISJONCTEUR MOYENNE TENSION

(43) Date of publication of application: 24.06.2020
(73) Proprietor: ABB SCHWEIZ AG, 5400 Baden (CH)
(72) Inventor: Reutner, Holger, 69214 Eppelheim (DE); Mechler, Günther, 74855 Haßmersheim (DE)
(74) Representative: Maiwald GmbH

(56) References cited:
- EP-A1- 2 197 011
- EP-A2- 1 189 246
- DE-A1- 102005 049 022
- DE-A1- 3 908 545
- GB-A- 1 087 733
- US-A- 5 699 031
- US-A1- 2009 021 089

## Description

### FIELD OF THE INVENTION

The present invention relates to a hybrid flux motor for a medium voltage circuit breaker, and to medium voltage circuit breaker having such a motor.

### BACKGROUND OF THE INVENTION

In power distribution grids with voltage levels between 10kV and 30kV each distribution circuit is provided with a medium voltage switch that is opened in case of short circuit or overload or in case of maintenance work in the close environment of that circuit.

An opening operation is usually done by the separation of the contact of two poles within a vacuum chamber thus causing the ignition of a vacuum arc carrying the circuit current in the form of ionized pole material. A fast separation of the poles and an appropriate chamber design help to interrupt the arc and thus the current.

A closing operation should also be performed by a fast motion of at least one of the two poles of a phase finally re-closing the contact in the vacuum chamber.

In circuit breakers three phases are opened by a single opening spring or closed by a single closing spring.

US2009/021089A1 describes that a motor and a control unit therefor comprise: salient rotor poles and salient stator poles, which are arranged along circumferences of three phases with an even interval therebetween; magnetic paths for passing magnetic fluxes, the paths permitting the magnetic fluxes passing through the salient rotor and stator poles of each phase to return to the rotor side; and substantially looped windings arranged between the salient stator poles of individual phases and the magnetic paths for passing magnetic fluxes, wherein currents are supplied to the windings in synchronization with the rotational position of the rotor to thereby output torque. It is described that since the structures of the stator, the rotor and the windings are simple, productivity is enhanced, whereby high quality, small size and low cost can be realized.

US5699031A describes an electromagnetic actuator with rotary core, comprising, housed in a casing: a magnetic yoke, a pair of fixed adjacent coils alternately energized, and a rotating element with a magnetic core; the yoke, the coils and the core having a common axis coinciding with that of the actuator, and the core being positioned between and/or within said coils, so as to close alternative circuits of magnetic flux, generated in the yoke by either one of the coils, between opposite axial pole pieces and central radial pole pieces of the yoke. In the actuator: the yoke comprises a single radial pole piece common to both coils and two sets of axial end pole pieces. The core comprises a continuous central part magnetically cooperating with the radial piece of the yoke and the two opposite sets of pole pieces axially projecting from the central part and magnetically cooperating with the sets of axial pole pieces of the yoke; in the two sets of pole pieces of the core, or alternatively in the two sets of the yoke, the pole pieces of one set are offset in respect of the pole pieces of the other set.

GB1087733A describes that an electromagnetic device for producing stepped rotary motion comprises a pair of cooperating polepieces which are arranged for relative movement when an associated coil is energized and an output member which is normally locked by a locking device but is disengaged so that the output member can follow the relative movement of the polepieces when the coil is energized.

EP1189246A2 describes that a rotary actuator includes a rotor which is disposed in a housing between first and second pole pieces of a stator. The rotor is rotatable relative to the stator between an unactuated position and an actuated position. It is descibed that during rotation of the rotor, the axial extent of a first working air gap between the rotor and a first pole piece of the stator remains constant, and that the axial extent of the working air gap between the rotor and the second pole piece of the stator decreases as the rotor moves from the unactuated position to the actuated position.

DE102005049022A1 describes that a rotary magnet has an armature and a yoke rotatable relative to one another about a common longitudinal axis. Two working air gaps are formed between same off-set relative to each other so that during relative rotation an overlapping surface area of one gap reduces whilst that of the other gap increases. At least one coil and permanent magnet are arranged so that when the coil is energised they produce rectified magnetic fields at one of the gaps and oppositely directed magnetic fields at the other gap. Two coils are spaced from one another in the direction of the longitudinal axis and the permanent magnet is mounted between the two coils.

In conventional medium voltage switches, the movable poles of each of three phases are driven from closed to open position by a sufficiently strong opening spring that has been loaded by the previously discharged closing spring. Usually there are separate springs for opening and closing. The springs are either loaded individually by a separate motor, or alternatively one of the springs is loaded from the discharge energy of the other spring thus only one loading motor being required.

The energy of opening and closing springs is usually transferred to the pushrod that drives the pole in a linear motion transferred from a rotating shaft that has different salient levers attached normal to its axes. One of these levers is connected to a transmission lever system that is connected to the linearly moving pushrod. Another lever is connected to the opening spring. A third lever is connected to the closing spring. Moreover, further connections can exist to latching and damping systems. Spring systems often suffer from a high tolerance of spring constants. During discharge unwanted vibrations can occur in the spring system and are transferred to the rest of the switching device with the risk of resonance phenomena. A control system is needed to trigger the release of opening or closing springs respectively and to control the motors charging those springs.

There is a need to address these issues.

### SUMMARY OF THE INVENTION

It would be advantageous to have an improved motor for a medium voltage circuit breaker.

The object of the present invention is solved with the subject matter of the independent claims, wherein further embodiments are incorporated in the dependent claims.

Appended claim 1 defines a hybrid flux motor for a medium voltage circuit breaker. Appended claim 15 defines a medium voltage circuit breaker. The invention and its scope of protection is defined by these claims. The following examples of the summary provide examples of how technical subject matters can be combined.

In an example, there is provided a hybrid flux motor for a medium voltage circuit breaker. The motor comprises:
- a rotor;
- a stator; and
- a coil.

The rotor is configured to be fixedly mounted to a main shaft of a circuit breaker of a medium voltage switchgear such that the rotor and main shaft rotate together about a rotation axis. The rotor comprises a central bridge and at least one salient pole. The stator is configured to be mounted at least partially around the rotor. The stator comprises at least one salient pole. When mounted to the circuit breaker the rotor and stator are configured such that when the at least one salient pole of the rotor faces the at least one salient pole of the stator an air gap separates the salient poles. The coil is wound around a part of the motor such that during operation of the motor the coil is configured not to move.

In other words, a hybrid flux motor is used in an actuation system to move poles of medium voltage switches, such as a medium voltage circuit breaker. The motor is small enough to fit in existing circuit breaker housings. Sufficient mechanical torque can be supplied to move the rotor from an open to a close position against the load torque of the opening spring and the pole compression springs and the friction forces that might be arising within the circuit breaker. A sufficiently short closing operation time is provided that is in the range of specifications. A speed of the pushrod at the position where it starts the compression of contact springs (as soon as poles in the vacuum chamber have contact to each other) can be below a specified threshold value (e.g. 1.5 m/s), through utilization of the motor. A capacitor that delivers the electrical current driving the closing motor drive can be small enough to fit somewhere inside the circuit breaker housing or in an existing controller housing respectively. The motor can be designed for the rotation in a well defined angular interval, with the angular position being transferred by an appropriate lever system to the pushrod position in the linear system. A resulting lever system can be identical with the lever system of a purely spring driven circuit breaker, with just the closing spring being replaced by a motor drive. In using a hybrid flux motor design, seizure issues that can relate to axial flux motors are mitigated, and the design is simplified through the need for just one coil.

In this manner, a control system can be used to trigger a drive motor instead of releasing the closing spring thus replacing the closing spring. Such a drive motor can be mounted on the same shaft with salient levers of a purely spring driven circuit breaker. Thus, the modification effort for the circuit breaker is reduced to a minimum, and unwanted vibrations that can occur in purely spring driven systems are mitigated.

According to the invention, when one salient pole of the rotor faces one salient pole of the stator an angularly constant air gap separates the salient poles.

In an example, not part of the invention, when the at least one salient pole of the rotor faces the at least one salient pole of the stator an angularly varying air gap separates the salient poles. Thus, the motor can operate with an angularly constant air gap and also with an arbitrary air gap.

According to the invention, the coil is wound around the bridge of the rotor.

In an example, not part of the invention, the coil is wound around the stator.

In an example, the stator is configured to be mounted to a stationary housing of the circuit breaker.

In an example, the rotor comprises a ferromagnetic material.

In an example, the stator comprises a ferromagnetic material.

In an example, when the rotor is mounted to the main shaft the central bridge comprises a ferromagnetic cylinder coaxial to the rotation axis.

According to the invention, when the rotor is mounted to the main shaft the coil is configured to generate a magnetic flux inside the bridge in an axial direction.

In an example, when mounted to the circuit breaker the rotor and stator are configured such that when one salient pole of the rotor faces one salient pole of the stator an angular extent of one salient pole of the rotor is substantially equal to an angular extent of one salient pole of the stator.

In an example, when mounted to the circuit breaker the rotor and stator are configured such that when one salient pole of the rotor faces one salient pole of the stator an axial extent of one salient pole of the rotor is substantially equal to an axial extent of one salient pole of the stator.

According to the invention, the rotor comprises two salient poles on opposite sides of the central bridge.

According to the invention, the stator comprises two salient poles on opposite sides of the stator.

In an example, the stator comprises a ferromagnetic tube. When the stator is mounted to the circuit breaker, an axis of the ferromagnetic tube is coaxial with the rotation axis.

In an example, the at least one salient pole of the stator is located on the inside of the ferromagnetic tube.

In an example, when the rotor and stator are mounted to the circuit breaker, an axial extent of the ferromagnetic tube is substantially equal to an axial extent of the rotor.

In an example, an angular range of operation of the rotor relative to the stator is limited.

In an example, limitation of the angular range of operation of the rotor relative to the stator comprises limitation by a driving electromagnetic force.

In an example, limitation of the angular range of operation of the rotor relative to the stator comprises limitation by at least one mechanical hard stop.

In an example, the stator and/or rotor comprises an end stop.

In a second aspect, there is provided a medium voltage circuit breaker with at least one vacuum interrupter, each comprising at least one moveable electrical contact for electrical power interruption, operated via a main shaft to which is mounted a motor according to the first aspect.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a cross sectional view of a hybrid flux motor with two salient poles in both rotor and stator on both sides of the rotor bridge. The cross section is section B-B normal to rotational axis (see Fig. 2.);
Fig. 2 shows a cross sectional view of the hybrid flux motor with two salient poles in both rotor and stator on both sides of the rotor bridge of Fig. 1. The cross section is section A-A through the rotational axis (see Fig. 1.);
Fig. 3 shows flux density distribution for the hybrid flux motor of Figs. 1-2, with respect to the two cross-sections;
Fig. 4 shows a 3D view of a hybrid flux salient pole motor with two poles on both the stator and rotor side;
Fig. 5 shows the torque characteristics of a hybrid flux motor with two salient poles on both stator and rotor;
Fig. 6 shows views normal to the axis and in the axial direction for a hybrid flux motor with a single salient pole on both stator and rotor, with the top two views and bottom two views being for the same motor, but reproduced in slightly different forms to aid representation;
Fig. 7 shows the torque characteristics of a hybrid flux motor with one salient pole on both stator and rotor; and
Fig. 8 shows a schematic example of the kinematic arrangement and motion during the closing operation of a medium voltage circuit breaker, for a lever system that translates rotational motion of the motor drive to linear motion of the pushrod.

### DETAILED DESCRIPTION OF EMBODIMENTS

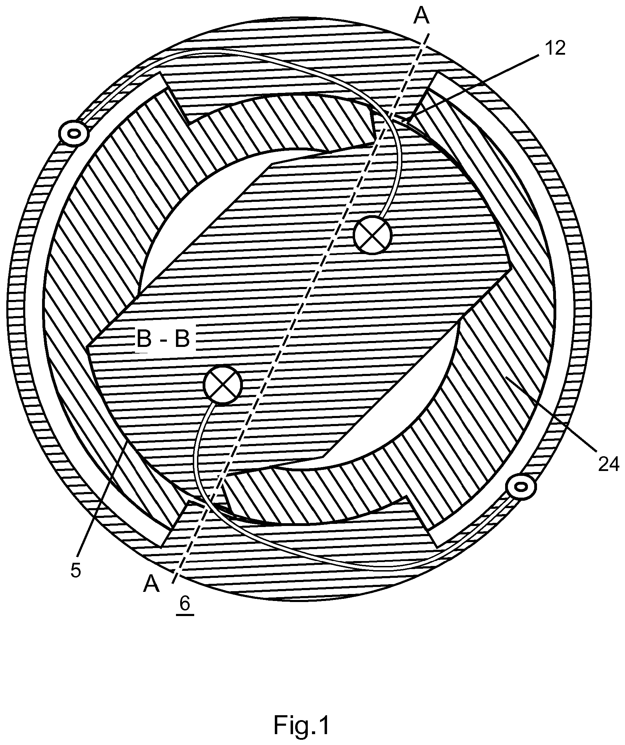

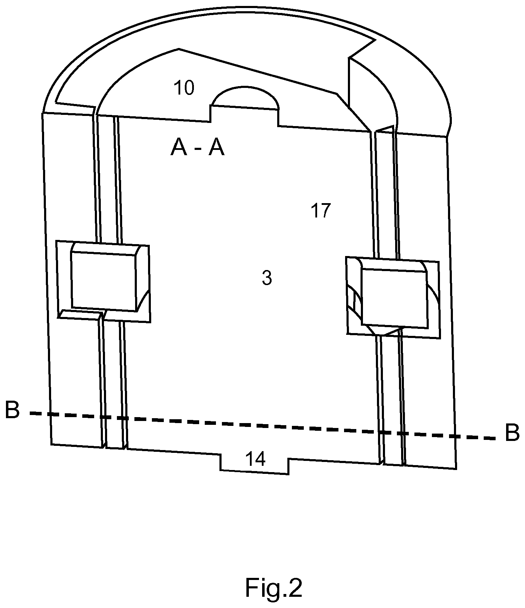

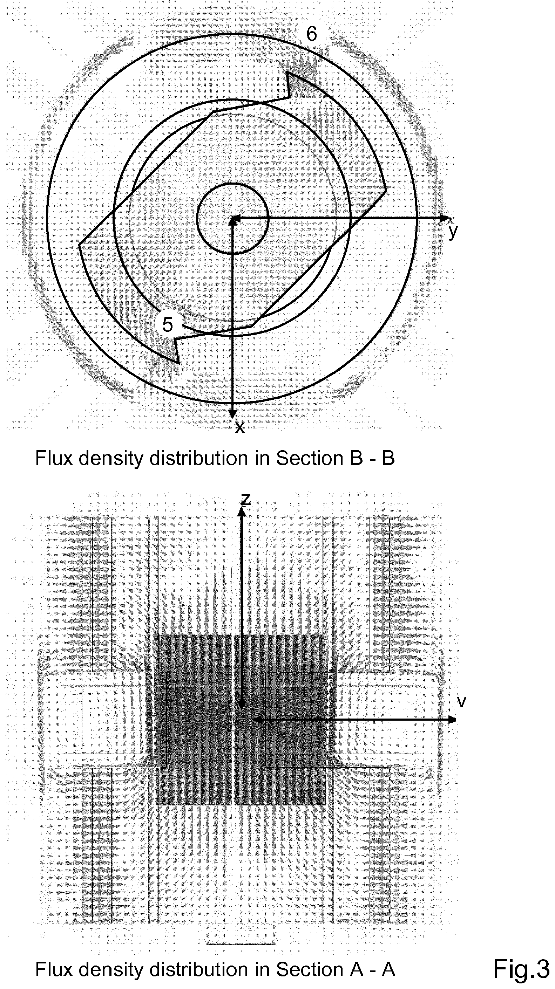

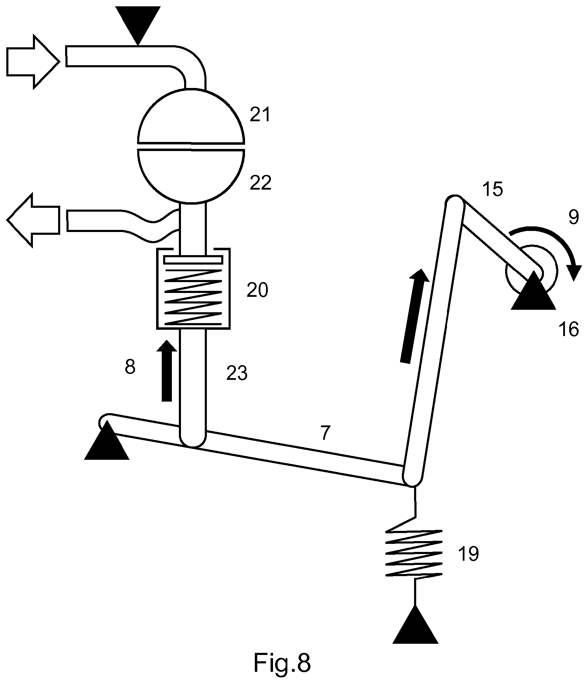

Figs. 1-8 show hybrid flux motors for a medium voltage circuit breaker, and how they can operate with a medium voltage circuit breaker.

These figures show a hybrid flux motor for a medium voltage circuit breaker. The motor comprises a rotor 2, a stator 1, and a coil 24. The rotor is configured to be fixedly mounted to a main shaft of a circuit breaker of a medium voltage switchgear such that the rotor and main shaft rotate together about a rotation axis. The rotor comprises a central bridge 3 and at least one salient pole 5. The stator is configured to be mounted at least partially around the rotor. The stator comprises at least one salient pole 6. When mounted to the circuit breaker the rotor and stator are configured such that when the at least one salient pole 5 of the rotor faces the at least one salient pole 6 of the stator an air gap 12 separates the salient poles 5, 6. The coil is wound around a part of the motor such that during operation of the motor the coil is configured not to move.

In an example, the rotation axis is a longitudinal axis of the main shaft.

According to the invention, when one salient pole of the rotor faces one salient pole of the stator an angularly constant air gap separates the salient poles.

According to an example, not part of the invention, when the at least one salient pole of the rotor faces the at least one salient pole of the stator an angularly varying air gap separates the salient poles.

According to the invention, the coil is wound around the bridge of the rotor.

According to an example, not part of the invention, the coil is wound around the stator.

According to an example, the stator is configured to be mounted to a stationary housing of the circuit breaker.

According to an example, the rotor comprises a ferromagnetic material.

According to an example, the stator comprises a ferromagnetic material.

According to an example, when the rotor is mounted to the main shaft the central bridge comprises a ferromagnetic cylinder coaxial to the rotation axis.

According to the invention, when the rotor is mounted to the main shaft the coil is configured to generate a magnetic flux inside the bridge in an axial direction.

According to an example, when mounted to the circuit breaker the rotor and stator are configured such that when one salient pole 5 of the rotor faces one salient pole 6 of the stator an angular extent of one salient pole of the rotor is substantially equal to an angular extent of one salient pole of the stator.

According to an example, when mounted to the circuit breaker the rotor and stator are configured such that when one salient pole 5 of the rotor faces one salient pole 6 of the stator an axial extent of one salient pole of the rotor is substantially equal to an axial extent of one salient pole of the stator.

According to the invention, the rotor comprises two salient poles on opposite sides of the central bridge.

According to the invention, the stator comprises two salient poles on opposite sides of the stator.

According to an example, the stator comprises a ferromagnetic tube 4. When the stator is mounted to the circuit breaker, an axis of the ferromagnetic tube is coaxial with the rotation axis.

In an example, rather than use a tube for axial flux guiding, a steel bridge with a rectangular cross section can be used.

According to an example, one salient pole of the stator is located on the inside of the ferromagnetic tube.

According to an example, when the rotor and stator are mounted to the circuit breaker, an axial extent of the ferromagnetic tube is substantially equal to an axial extent of the rotor.

According to an example, an angular range of operation of the rotor relative to the stator is limited.

According to an example, limitation of the angular range of operation of the rotor relative to the stator comprises limitation by a driving electromagnetic force. According to an example, limitation of the angular range of operation of the rotor relative to the stator comprises limitation by at least one mechanical hard stop.

According to an example, the stator and/or rotor comprises an end stop.

The figures also show a medium voltage circuit breaker with at least one vacuum interrupter, each comprising moveable electrical contacts for electrical power interruption, operated via a main shaft to which is mounted a motor as described above.

The challenges of operating a circuit breaker within the context of medium voltage switchgear are tackled with the present hybrid flux motor described with respect to Figs. 1-8.

The motor is mounted on the shaft 14 of a lever system used to translate rotational movement to linear motion of a pushrod in order to operate the medium voltage switch of a medium voltage circuit breaker (CB). The motor is mounted to the shaft 14 before the shaft is mounted into the CB housing. The coil is located at a position such that during operation of the motor it does not move. Thus, it can be would around the bridge of the rotor or wound around the stator. An alternative is to wind the coil 24 on an already mounted bobbin, which can be done although it can involve a high effort.

As the magnetic flux density generated in the ferromagnetic core 17 not only has components normal to axial direction but also in the axial direction, the motor is called a hybrid flux motor.

The ferromagnetic core 17 comprises a rotor 2 that is fixed to the drive shaft 14 and an outside stator 1 that is fixed to the housing of the CB. Between the rotor 2 and stator 1 a bearing is used to achieve a small tolerance for the minimum air gap 12 between rotor and stator.

The rotor 2 is divided in a bridge 3 part in the middle and salient pole 5 parts on both sides of the bridge 3. The bridge 3 is a ferromagnetic cylinder coaxial to the rotation axis. The salient pole 5 parts on both sides of the bridge 3 have the shape of a salient pole radial flux motor with a number of salient poles. The angular ranges of salient poles on both sides of the bridge are identical.

A coil 24 is wound around the bridge 3 part of the rotor 2 generating a magnetic flux inside the bridge 3 in axial direction. When entering the salient pole 5 parts of the rotor the magnetic flux is bent into radial direction to the salient poles 5 of the rotor 2.

The stator 1 comprises a ferromagnetic tube 4 over the full length of the rotor 2, and salient poles 6 inside the stator tube 4 over the axial range of the rotor salient poles 5. The angular position of the rotor 2 determines the degree of overlap between rotor 5 and stator 6 salient poles, which have an air gap 12 between each other that is constant or varying/non-constant in the overlapping angular range.

The rotor flux bent into radial direction crosses the air gap 12 from rotor salient poles 5 to stator salient poles 6. The flux lines excite a torque on the rotor 2 in order to minimize the magnetic reluctance of the magnetic circuit. This is achieved once the overlap of opposing salient poles is maximum.

The moment of inertia of the rotor 2 causes the rotor 2 to continue its rotation while the overlap is reduced again and the magnetic torque becomes negative.

As the motor is coupled to external masses via the mentioned lever system 7, the moment of inertia will be even bigger and will become a function of angular position due to the transformation between the linear and the rotational systems.

The opening spring and the pole contact springs in the linear system appear in the rotational motor system as counter torques of the driving motor torque also being functions of angular position. In addition, there are friction torques as counter torques. The outside stator tube 4 is supposed to bend the flux coming from the rotor 2 to axial direction and guide it to the other side of the bridge 3, where it is bent again in a radial direction through the stator salient pole 6 via the air gap 12 to the rotor salient pole 5 and finally bent again in axial direction. If the outside stator tube 4 is magnetically saturated, a significant part of flux will be guided back in environmental air. This can be prevented by a thicker stator tube 4. Here a balance is required between: (a) covered space; (b) EMC problems; and (c) the magnetic torque.

There are different options to manufacture rotor and stator bodies:
1. Both rotor and stator bodies can be solid. High eddy currents in the azimuthal direction could cause significant eddy losses and a reduction of operation speed. These eddy currents could be reduced by cutting the bodies in coaxial planes. This could also help to mount the cores on the rotational shaft. Thin insulating sheets in the cutting planes would further reduce the eddy currents.
2. The rotor and stator parts with salient poles, excluding the stator tube and the rotor bridge cross section can be laminated. Here the massive bridge cylinder can be prolonged over the full length of the rotor. Thus, it can together with the contained shaft guide the flux preferred in axial direction and almost equally distribute it to all laminations that guide the flux preferred in radial direction. The laminations can easily be shifted over the prolonged bridge cylinder and finally be fixed by nuts and bolts. The prolonged bridge cylinder can be also cut in coaxial planes in order to reduce eddy currents. The bridge cylinder needs an axial bore that will contain the shaft. All parts of the rotor and the shaft need to be stiffly connected to each other. The laminated stator can be inserted into the stator tube on both sides of the bridge and finally be fixed by nuts and bolts. The stator tube at the outside collects the flux from stator laminations and bends it in axial direction.

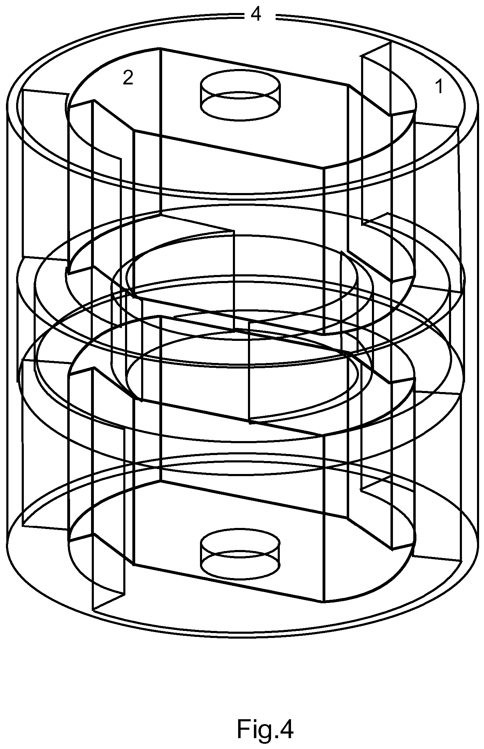

Referring specifically to Fig. 4, this kind of motor is appropriate for an angular range of operation between 45 and 90 degrees. The volume of the coil is limited by the length of the rotor bridge in the axial direction and the distance between (a) the rotor bridge radius and (b) the inner stator tube radius in radial direction. If a higher number of poles is used in both rotor and stator, the angular range of operation will be reduced accordingly.

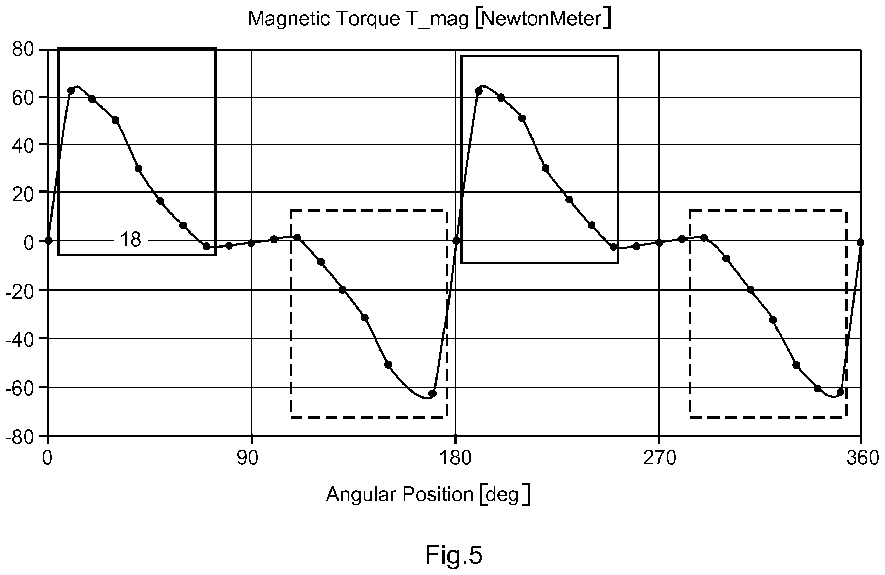

Fig. 5 shows the typical torque caused by the magnetic field at different angular positions of the rotor relative to the stator for the motor having 2 salient poles on both the rotor and stator, statically calculated with a constant coil current. Windows show ranges of operation with positive angular acceleration (solid lines) or negative angular acceleration (dashed lines)

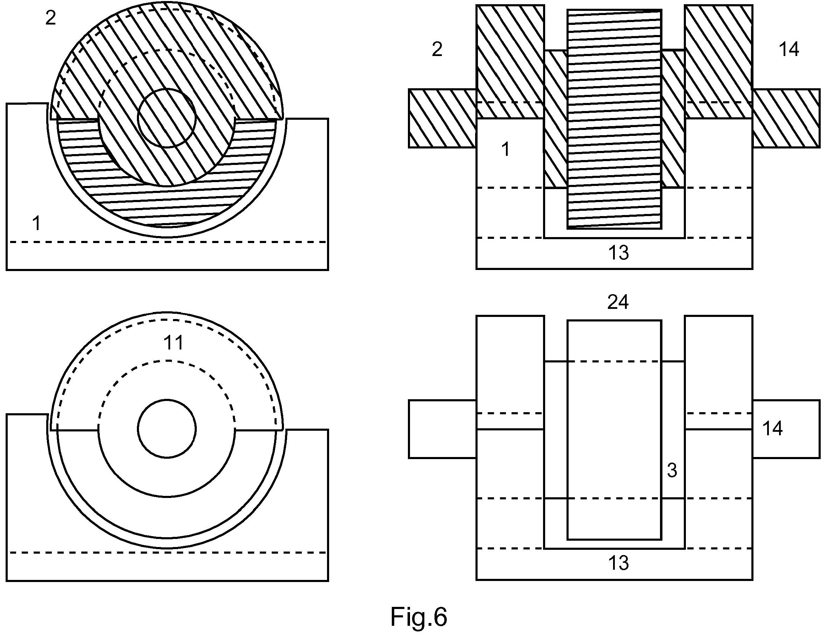

Regarding Fig. 6, here a tube is not used for axial magnetic flux guide in the stator, but a steel bridge with a rectangular cross section is used. This kind of hybrid flux motor is appropriate for an angular range of operation between 90 and 180 degrees. It is an asymmetric salient pole motor.

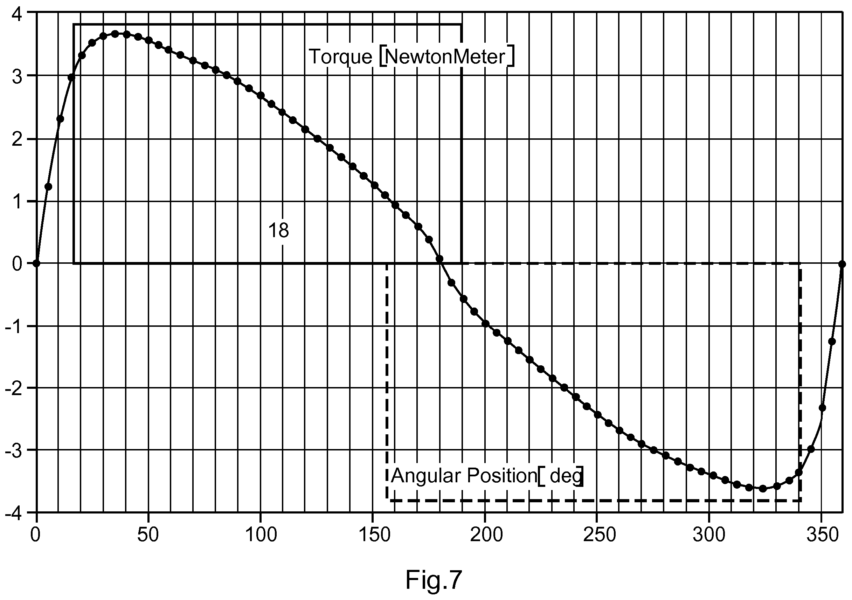

Fig. 7 shows the typical torque caused by the magnetic field at different angular positions of the rotor relative to the stator for the motor having one salient pole on both the rotor and stator, statically calculated with a constant coil current. Windows show ranges of operation with positive angular acceleration (solid lines) or negative angular acceleration (dashed lines)

### Reference Numerals

1 Stator
2 Rotor
3 Rotor Bridge with tube cross section
4 Stator Tube
5 Rotor salient pole
6 Stator salient pole
7 Lever system for transmission
8 Linear system
9 Rotational system of motor
10 Symmetric rotor
11 Asymmetric rotor
12 Air gap
13 Stator Bridge with rectangular cross section
14 Shaft
15 Salient lever of shaft
16 Motor Drive
16 Ferromagnetic core
18 Angular range of operation
19 Opening spring
20 Compression spring
21 Stationary VI Pole
22 Movable VI Pole
23 Pushrod
24 Coil

## Claims

1. A hybrid flux motor for a medium voltage circuit breaker, the motor comprising:
- a rotor (2);
- a stator (1); and
- a coil (24);
wherein, the rotor is configured to be fixedly mounted to a main shaft of a circuit breaker of a medium voltage switchgear such that the rotor and main shaft rotate together about a rotation axis;
wherein, the rotor comprises a central bridge (3) and two rotor salient poles (5);
wherein the central bridge is located at a first position along the rotation axis;
wherein a first rotor salient pole of the two rotor salient poles is located at a second position along the rotation axis;
wherein the second rotor salient pole of the two rotor salient poles is located at a third position along the rotation axis, wherein the second position and third position are either side of the first position;
wherein the first rotor salient pole comprises two rotor pole parts on radially opposite sides of the rotation axis and located at the second position along the rotation axis;
wherein the second rotor salient pole comprises two rotor pole parts on radially opposite sides of the rotation axis and located at the third position along the rotation axis;
wherein an angular orientation of the two rotor pole parts of the first rotor salient pole is the same as an angular orientation of the two rotor pole parts of the second rotor salient pole;
wherein the coil is wound around the bridge of the rotor to generate a magnetic flux inside the bridge in the axial direction, and wherein during operation of the motor the coil is configured not to move;
wherein, the stator is configured to be mounted at least partially around the rotor;
wherein, the stator comprises two stator salient poles (6);
wherein a first stator salient pole of the two stator salient poles is located at the second position along the rotation axis;
wherein the second stator salient pole of the two stator salient poles is located at the third position along the rotation axis, wherein the second position and third position are either side of the first position;
wherein the first stator salient pole comprises two stator pole parts on radially opposite sides of the rotation axis and located at the second position along the rotation axis;
wherein the second stator salient pole comprises two stator pole parts on radially opposite sides of the rotation axis and located at the third position along the rotation axis;
wherein an angular orientation of the two stator pole parts of the first stator salient pole is the same as an angular orientation of the two stator pole parts of the second stator salient pole; and
wherein when mounted to the circuit breaker the rotor and stator are configured such that when the rotor pole parts of the rotor salient poles (5) face the stator pole parts of the stator salient poles (6) an angularly constant air gap separates the rotor pole parts of the rotor salient poles (5) from the stator pole parts of the stator salient poles (6); and
wherein an angular range of operation of the rotor relative to the stator is limited.

2. Motor according to claim 1, wherein the stator is configured to be mounted to a stationary housing of the circuit breaker.

3. Motor according to any of claims 1-2, wherein the rotor comprises a ferromagnetic material.

4. Motor according to any of claims 1-3, wherein the stator comprises a ferromagnetic material.

5. Motor according to any of claims 1-4, wherein when the rotor is mounted to the main shaft the central bridge comprises a ferromagnetic cylinder coaxial to the rotation axis.

6. Motor according to any of claims 1-5, wherein when mounted to the circuit breaker the rotor and stator are configured such that when one salient pole (5) of the rotor faces one salient pole (6) of the stator an angular extent of the salient pole of the rotor is substantially equal to an angular extent of the salient pole of the stator.

7. Motor according to any of claims 1-6, wherein when mounted to the circuit breaker the rotor and stator are configured such that when one salient pole (5) of the rotor faces one salient pole (6) of the stator an axial extent of the salient pole of the rotor is substantially equal to an axial extent of the salient pole of the stator.

8. Motor according to any of claims 1-7, wherein the stator comprises a ferromagnetic tube (4), wherein when the stator is mounted to the circuit breaker an axis of the ferromagnetic tube is coaxial with the rotation axis.

9. Motor according to claim 8, wherein the two salient poles of the stator are located on the inside of the ferromagnetic tube.

10. Motor according to any of claims 8-9, wherein when the rotor and stator are mounted to the circuit breaker, an axial extent of the ferromagnetic tube is substantially equal to an axial extent of the rotor.

11. Motor according to any of claims 1-10, wherein limitation of the angular range of operation of the rotor relative to the stator comprises limitation by a driving electromagnetic force.

12. Motor according to any of claims 1-11, wherein
limitation of the angular range of operation of the rotor relative to the stator comprises limitation by at least one mechanical hard stop.

13. Motor according to claim 12, wherein the stator and/or rotor comprises an end stop.

14. A medium voltage circuit breaker with at least one vacuum interrupter, each comprising moveable electrical contacts for electrical power interruption, operated via a main shaft to which is mounted a motor according to any of claims 1-13.

## Patentansprüche

1. Hybridflussmotor für einen Mittelspannungs-Leistungsschalter, wobei der Motor umfasst:
- einen Rotor (2);
- einen Stator (1); und
- eine Spule (24);
wobei der Rotor dazu ausgebildet ist, an einer Hauptwelle eines Leistungsschalters einer Mittelspannungsschaltanlage derart montiert zu werden, dass der Rotor und die Hauptwelle gemeinsam um eine Rotationsachse rotieren;
wobei der Rotor einen zentralen Steg (3) und zwei Rotorschenkelpole (5) umfasst;
wobei der zentrale Steg an einer ersten Position entlang der Rotationsachse angeordnet ist;
wobei ein erster Rotorschenkelpol der beiden Rotorschenkelpole an einer zweiten Position entlang der Rotationsachse angeordnet ist;
wobei der zweite Rotorschenkelpol der beiden Rotorschenkelpole an einer dritten Position entlang der Rotationsachse angeordnet ist, wobei sich die zweite Position und die dritte Position beiderseits der ersten Position befinden;
wobei der erste Rotorschenkelpol zwei Rotorpolteile auf radial gegenüberliegenden Seiten der Rotationsachse umfasst, die an der zweiten Position entlang der Rotationsachse angeordnet sind;
wobei der zweite Rotorschenkelpol zwei Rotorpolteile auf radial gegenüberliegenden Seiten der Rotationsachse umfasst, die an der dritten Position entlang der Rotationsachse angeordnet sind;
wobei eine Winkelausrichtung der beiden Rotorpolteile des ersten Rotorschenkelpols dieselbe ist wie eine Winkelausrichtung der beiden Rotorpolteile des zweiten Rotorschenkelpols;
wobei die Spule um den Steg des Rotors gewickelt ist, um einen magnetischen Fluss innerhalb des Stegs in axialer Richtung zu erzeugen, und wobei die Spule während des Betriebs des Motors dazu ausgebildet ist, sich nicht zu bewegen;
wobei der Stator dazu ausgebildet ist, zumindest teilweise um den Rotor herum montiert zu werden;
wobei der Stator zwei Statorschenkelpole (6) umfasst;
wobei ein erster Statorschenkelpol der beiden Statorschenkelpole an der zweiten Position entlang der Rotationsachse angeordnet ist;
wobei der zweite Statorschenkelpol der beiden Statorschenkelpole an der dritten Position entlang der Rotationsachse angeordnet ist, wobei sich die zweite Position und die dritte Position beiderseits der ersten Position befinden;
wobei der erste Statorschenkelpol zwei Statorpolteile auf radial gegenüberliegenden Seiten der Rotationsachse umfasst, die an der zweiten Position entlang der Rotationsachse angeordnet sind;
wobei der zweite Statorschenkelpol zwei Statorpolteile auf radial gegenüberliegenden Seiten der Rotationsachse umfasst, die an der dritten Position entlang der Rotationsachse angeordnet sind;
wobei eine Winkelausrichtung der beiden Statorpolteile des ersten Statorschenkelpols dieselbe ist wie eine Winkelausrichtung der beiden Statorpolteile des zweiten Statorschenkelpols; und
wobei, wenn sie an dem Leistungsschalter montiert sind, der Rotor und der Stator derart ausgebildet sind, dass, wenn die Rotorpolteile der Rotorschenkelpole (5) den Statorpolteilen der Statorschenkelpole (6) gegenüberliegen, ein winkelkonstanter Luftspalt die Rotorpolteile der Rotorschenkelpole (5) von den Statorpolteilen der Statorschenkelpole (6) trennt; und
wobei ein Betriebswinkelbereich des Rotors relativ zum Stator begrenzt ist.

2. Motor nach Anspruch 1, wobei der Stator dazu ausgebildet ist, an einem stationären Gehäuse des Leistungsschalters montiert zu werden.

3. Motor nach einem der Ansprüche 1-2, wobei der Rotor ein ferromagnetisches Material umfasst.

4. Motor nach einem der Ansprüche 1-3, wobei der Stator ein ferromagnetisches Material umfasst.

5. Motor nach einem der Ansprüche 1-4, wobei, wenn der Rotor an der Hauptwelle montiert ist, der zentrale Steg einen ferromagnetischen Zylinder umfasst, der koaxial zur Rotationsachse ist.

6. Motor nach einem der Ansprüche 1-5, wobei, wenn sie an dem Leistungsschalter montiert sind, der Rotor und der Stator derart ausgebildet sind, dass, wenn ein Schenkelpol (5) des Rotors einem Schenkelpol (6) des Stators gegenüberliegt, eine Winkelerstreckung des Schenkelpols des Rotors im Wesentlichen gleich einer Winkelerstreckung des Schenkelpols des Stators ist.

7. Motor nach einem der Ansprüche 1-6, wobei, wenn sie an dem Leistungsschalter montiert sind, der Rotor und der Stator derart ausgebildet sind, dass, wenn ein Schenkelpol (5) des Rotors einem Schenkelpol (6) des Stators gegenüberliegt, eine axiale Erstreckung des Schenkelpols des Rotors im Wesentlichen gleich einer axialen Erstreckung des Schenkelpols des Stators ist.

8. Motor nach einem der Ansprüche 1-7, wobei der Stator ein ferromagnetisches Rohr (4) umfasst, wobei, wenn der Stator an dem Leistungsschalter montiert ist, eine Achse des ferromagnetischen Rohrs koaxial mit der Rotationsachse ist.

9. Motor nach Anspruch 8, wobei die beiden Schenkelpole des Stators auf der Innenseite des ferromagnetischen Rohrs angeordnet sind.

10. Motor nach einem der Ansprüche 9, wobei, wenn der Rotor und der Stator an dem Leistungsschalter montiert sind, eine axiale Erstreckung des ferromagnetischen Rohrs im Wesentlichen gleich einer axialen Erstreckung des Rotors ist.

11. Motor nach einem der Ansprüche 1-10, wobei die Begrenzung des Betriebswinkelbereichs des Rotors relativ zum Stator eine Begrenzung durch eine antreibende elektromagnetische Kraft umfasst.

12. Motor nach einem der Ansprüche 1-11, wobei die Begrenzung des Betriebswinkelbereichs des Rotors relativ zum Stator eine Begrenzung durch mindestens einen mechanischen Festanschlag umfasst.

13. Motor nach Anspruch 12, wobei der Stator und/oder der Rotor einen Endanschlag umfasst.

14. Mittelspannungs-Leistungsschalter mit mindestens einer Vakuumschaltröhre, die jeweils bewegliche elektrische Kontakte zur Unterbrechung elektrischer Leistung umfasst, betätigt über eine Hauptwelle, an der ein Motor nach einem der Ansprüche 1-13 montiert ist.

## Revendications

1. Moteur à flux hybride pour un disjoncteur moyenne tension, le moteur comprenant :
- un rotor (2) ;
- un stator (1) ; et
- une bobine (24) ;
dans lequel le rotor est configuré pour être monté de manière fixe sur un arbre principal d'un disjoncteur d'un dispositif de commutation moyenne tension de telle sorte que le rotor et l'arbre principal tournent conjointement autour d'un axe de rotation ;
dans lequel le rotor comprend un pont central (3) et deux pôles de rotor saillants (5) ;
dans lequel le pont central est situé à une première position le long de l'axe de rotation ;
dans lequel un premier pôle de rotor saillant des deux pôles de rotor saillants est situé à une deuxième position le long de l'axe de rotation ;
dans lequel le second pôle de rotor saillant des deux pôles de rotor saillants est situé à une troisième position le long de l'axe de rotation, la deuxième position et la troisième position étant de part et d'autre de la première position ;
dans lequel le premier pôle de rotor saillant comporte deux parties de pôles de rotor sur des côtés radialement opposés de l'axe de rotation et situées à la deuxième position le long de l'axe de rotation ;
dans lequel le second pôle de rotor saillant comporte deux parties de pôles de rotor sur des côtés radialement opposés de l'axe de rotation et situées à la troisième position le long de l'axe de rotation ;
dans lequel une orientation angulaire des deux parties de pôles de rotor du premier pôle de rotor saillant est la même qu'une orientation angulaire des deux parties de pôles de rotor du second pôle de rotor saillant ;
dans lequel la bobine est enroulée autour du pont du rotor pour générer un flux magnétique à l'intérieur du pont dans la direction axiale, et dans lequel lors du fonctionnement du moteur, la bobine est configurée pour ne pas se déplacer ;
dans lequel le stator est configuré pour être monté au moins partiellement autour du rotor ;
dans lequel le stator comprend deux pôles de stator saillants (6) ;
dans lequel un premier pôle de stator saillant des deux pôles de stator saillants est situé à la deuxième position le long de l'axe de rotation ;
dans lequel le second pôle de stator saillant des deux pôles de stator saillants est situé à la troisième position le long de l'axe de rotation, la deuxième position et la troisième position étant de part et d'autre de la première position ;
dans lequel le premier pôle de stator saillant comporte deux parties de pôles de stator sur des côtés radialement opposés de l'axe de rotation et situées à la deuxième position le long de l'axe de rotation ;
dans lequel le second pôle de stator saillant comporte deux parties de pôles de stator sur des côtés radialement opposés de l'axe de rotation et situées à la troisième position le long de l'axe de rotation ;
dans lequel une orientation angulaire des deux parties de pôles de stator du premier pôle de stator saillant est la même qu'une orientation angulaire des deux parties de pôles de stator du second pôle de stator saillant ; et lorsqu'ils sont montés sur le disjoncteur, le rotor et le stator sont configurés de telle sorte que, lorsque les parties de pôles de rotor des pôles de rotor saillants (5) font face aux parties de pôles de stator des pôles de stator saillants (6), un entrefer angulairement constant sépare les parties de pôles de rotor des pôles de rotor saillants (5) des parties de pôles de stator des pôles de stator saillants (6) ; et
dans lequel une plage angulaire de fonctionnement du rotor par rapport au stator est limitée.

2. Moteur selon la revendication 1, dans lequel le stator est configuré pour être monté sur un boîtier fixe du disjoncteur.

3. Moteur selon l'une quelconque des revendications 1 à 2, dans lequel le rotor comprend un matériau ferromagnétique.

4. Moteur selon l'une quelconque des revendications 1 à 3, dans lequel le stator comprend un matériau ferromagnétique.

5. Moteur selon l'une quelconque des revendications 1 à 4, dans lequel, lorsque le rotor est monté sur l'arbre principal, le pont central comprend un cylindre ferromagnétique coaxial à l'axe de rotation.

6. Moteur selon l'une quelconque des revendications 1 à 5, dans lequel, lorsqu'ils sont montés sur le disjoncteur, le rotor et le stator sont configurés de telle sorte que lorsqu'un pôle saillant (5) du rotor fait face à un pôle saillant (6) du stator, une étendue angulaire du pôle saillant du rotor est sensiblement égale à une étendue angulaire du pôle saillant du stator.

7. Moteur selon l'une quelconque des revendications 1 à 6, dans lequel, lorsqu'ils sont montés sur le disjoncteur, le rotor et le stator sont configurés de telle sorte que lorsqu'un pôle saillant (5) du rotor fait face à un pôle saillant (6) du stator, une étendue axiale du pôle saillant du rotor est sensiblement égale à une étendue axiale du pôle saillant du stator.

8. Moteur selon l'une quelconque des revendications 1 à 7, dans lequel le stator comprend un tube ferromagnétique (4), dans lequel, lorsque le stator est monté sur le disjoncteur, un axe du tube ferromagnétique est coaxial à l'axe de rotation.

9. Moteur selon la revendication 8, dans lequel les deux pôles saillants du stator sont situés à l'intérieur du tube ferromagnétique.

10. Moteur selon l'une quelconque des revendications 8 à 9, dans lequel, lorsque le rotor et le stator sont montés sur le disjoncteur, une étendue axiale du tube ferromagnétique est sensiblement égale à une étendue axiale du rotor.

11. Moteur selon l'une quelconque des revendications 1 à 10, dans lequel la limitation de la plage angulaire de fonctionnement du rotor par rapport au stator comprend une limitation par une force électromagnétique d'entraînement.

12. Moteur selon l'une quelconque des revendications 1 à 11, dans lequel la limitation de la plage angulaire de fonctionnement du rotor par rapport au stator comprend une limitation par au moins une butée mécanique dure.

13. Moteur selon la revendication 12, dans lequel le stator et/ou le rotor comprend une butée d'extrémité.

14. Disjoncteur moyenne tension avec au moins un interrupteur à vide, chacun comprenant des contacts électriques mobiles pour une interruption d'énergie électrique, opéré par l'intermédiaire d'un arbre principal sur lequel est monté un moteur selon l'une quelconque des revendications 1 à 13.
